# EUROPÄISCHE PATENTSCHRIFT

(11) **EP 3 132 727 B1**
(45) Veröffentlichungstag und Bekanntmachung des Hinweises auf die Patenterteilung: **26.02.2020**
(21) Anmeldenummer: 16182857.9
(22) Anmeldetag: 04.08.2016
(51) Int. Cl.: A47J 31/46

(54) **VORRICHTUNG ZUR ZUBEREITUNG EINES GETRÄNKES**
BEVERAGE MACHINE
MACHINE POUR LA PRÉPARATION DE BOISSON

(30) Priorität: 19.08.2015 DE 102015113753
(43) Veröffentlichungstag der Anmeldung: 22.02.2017
(73) Patentinhaber: Eugster/Frismag AG, 8580 Amriswil (CH)
(72) Erfinder: ZWAHLEN, Christof, 8590 Romanshorn (CH)
(74) Vertreter: Patentanwälte Behrmann Wagner PartG mbB

(56) Entgegenhaltungen:
- DE-A1-102007 053 253
- DE-A1-102013 207 181
- US-A1- 2006 096 465

## Beschreibung

Die vorliegende Erfindung betrifft eine Vorrichtung zur Bereitung eines Heißgetränks nach dem Oberbegriff des Hauptanspruchs. Ferner betrifft die vorliegende Erfindung eine Verwendung einer derartigen Bereitungsvorrichtung.

Aus dem Stand der Technik sind in Form gängiger und marktüblicher Portionskaffeemaschinen gattungsbildende Bereitungsvorrichtungen allgemein bekannt; der Getränkerohstoff, bevorzugt und geeignet als kapselartige Einzelportionsverpackung vorgesehen, wird zu diesem Zweck in eine ansonsten bekannte Brüheinheit des Gehäuses eingeführt und mit erwärmtem Wasser mit einem Druck zwischen ca. 10bar und 16bar durchströmt, wodurch dann ein Heißgetränk, hier Kaffee, im Kontakt mit dem Getränkerohstoff bereitet und in ansonsten bekannter Weise über einen Auslass in einen zum Genuss vorgesehenen Behälter ausgetragen werden kann.

Die zum Erwärmen des - aus einem gehäuseinternen Tank, alternativ direkt über einen Frischwasseranschluss des Gehäuses herangeführten - Wassers vorgesehene Erwärmungsvorrichtung ist üblicherweise als Thermoblockheizung realisiert. Hier wird das Wasser beim - pumpengetriebenen - Transport durch einen Heizkörper elektrisch beheizt, wobei die Anordnung blockartig ausgestaltet ist.

Der Erwärmungsvorrichtung zugeordnete Regelmittel, insbesondere in Form einer ein Temperatur-Sollwertsignal verarbeitenden elektronischen Regelschaltung, sind vorgesehen, um das aus der Erwärmungsvorrichtung austretende Heißwasser auf einen für die Brüheinheit vorgesehenen bzw. geeigneten Temperaturwert zu regeln. Insbesondere vor dem Hintergrund einer Empfindlichkeit des Getränkerohstoffs für Abweichungen von dem Temperatursollwert kommt einer Beherrschung dieser Temperaturregelung Bedeutung zu. In ansonsten bekannter Weise erfolgt die Temperaturdetektion der Erwärmungsvorrichtung unter Nutzung eines temperaturveränderlichen elektrischen Widerstands.

Derartige, als aus dem Stand der Technik bekannt vorauszusetzende, auf eine Solltemperatur geregelte Erwärmungsvorrichtungen sind in der Lage, insbesondere in einem eingeschwungenen Dauerbetriebszustand das nachfolgend der Brüheinheit zuzuleitende erwärmte Wasser weitgehend konstant auf der vorbestimmten bzw. ggf. auch einstellbaren Solltemperatur zu halten, wobei dann eine Dauer einer Anpassung an Parameterschwankungen, etwa eine fluktuierende, in die Erwärmungsvorrichtung eintretende Wassermenge oder eine Änderung einer zur elektrischen Beheizung verwendeten Netzspannung entsprechend eine Ausgestaltung des Regelsystems, insbesondere einer hierdurch realisierten Regelzeitkonstanten, ausgeregelt wird.

Allerdings ist eine derartige, bekannte Temperaturregelung insbesondere im Hinblick auf kurzfristige und potenziell signifikante Spannungsschwankungen unbefriedigend und nachteilig - so hat sich etwa im Rahmen des vorliegenden Erfindungskontexts herausgestellt, dass Schwankungen in der Netzspannung, insbesondere Spannungsspitzen oberhalb eines typischen Netzspannungs-Mittelwerts von etwa 230V, signifikante Einflüsse auf das Heizverhalten der Erwärmungsvorrichtung, insbesondere bei Nutzung eines Thermoblocks, haben, nicht zuletzt als der Spannungseinfluss auf die elektrische Heizleistung quadratisch ist. Wird dann - lediglich - durch Temperaturdetektion und Regelung der elektrischen Beheizung der Erwärmungsvorrichtung als Reaktion auf eine detektierte Temperaturveränderung ein regelungstechnischer Ausgleich vorgenommen, hat es bereits eine potenziell nachteilige Über-Erwärmung des Wassers gegeben, mit der wiederum nachteiligen Konsequenz, dass für den vorgesehenen Brauzweck zu heißes Wasser in die Brüheinheit eintritt. Gerade jedoch im Fall von temperatursensiblem Kaffeepulver als Getränkerohstoff in der Brüheinheit (bzw. in der in der Brüheinheit vorgesehenen Portionsverpackung, etwa Kapsel) zeigt dies dann unerwünschte Effekte im erzeugten und ausgetragenen Heißgetränk: So führt etwa die beschriebene, temporäre Überbeheizung des Wassers einerseits zu einer problematischen Auslaugung bzw. unerwünschten Behandlung des Getränkerohstoffs, etwa im Hinblick auf eine nachteilige Ausbringung von Fremdstoffen, welche typischerweise erst oberhalb einer Temperaturschwelle gelöst werden und sonst im Regelfall im Kaffeerohstoff verbleiben würde.

In diesem Zusammenhang ist aus dem Stand der Technik noch die DE 10 2007 053253 A1 bekannt, die generisch eine Regelfunktionalität für, mit einer Netzspannung betriebener Verbraucher im Rahmen einer Bereitungsvorrichtung beschreibt. Allerdings geht die Druckschrift nicht auf die konkrete Umsetzung eines erfindungsgemäßen Anfahrtszeitraums ein.

Andererseits führt die im Rahmen des vorliegenden Erfindungskontexts nachteilige Überbeheizung zu einer visuell sichtbaren und geschmacklichen Beeinträchtigung der Crema eines Kaffee-Heißgetränks, nämlich des beabsichtigten dichten Schaums, der sich auf dem Kaffee-Heißgetränk beim Ausbringen bildet. Dieser nachteilige Effekt ist auch als "Verbrennen" der Crema bekannt und kann im Extremfall dazu führen, dass neben einer unerwünschten dunkeln Verfärbung kaum oder kein derartiger Schaum entsteht.

Aufgabe der vorliegenden Erfindung ist es daher, eine Vorrichtung zur Bereitung eines Heißgetränks nach dem Oberbegriff des Hauptanspruchs im Hinblick auf ihre Betriebseigenschaften zu verbessern, dabei insbesondere das Entstehen von netzspannungsbedingten Temperaturschwankungen des der Brüheinheit zuzuführenden, erwärmten Wassers zu verhindern und so sicherzustellen, dass zu jedem Betriebszeitpunkt bzw. bei jeder Inbetriebnahme stets das Heißgetränk in konsistenter Qualität und ohne - wärmebedingte - Qualitätsbeeinträchtigung aus dem Gerät ausgetragen werden kann. Dabei ist zusätzlich sicherzustellen, dass die Bereitungsvorrichtung mit geringem Bauteile- bzw. Baugruppenaufwand realisierbar ist, so dass benötigte Komponenten- und Herstellungskosten, tauglich für eine Großserienproduktion, niedrig gehalten werden können.

Die Aufgabe wird durch die Vorrichtung zur Bereitung eines Heißgetränks mit den Merkmalen des Hauptanspruchs gelöst; vorteilhafte Weiterbildungen der Erfindung sind in Unteransprüchen beschrieben. Zusätzlich und vorteilhaft im Rahmen der Erfindung wird Schutz beansprucht für eine Verwendung einer derartigen Heißgetränk-Bereitungsvorrichtung als Portionskaffeemaschine, wobei sich insbesondere Einzelportionsverpackungen, weiter bevorzugt in Form gängiger Kapseln, als besonders bevorzugt und geeignet zur Verarbeitung durch bzw. Verwendung im Rahmen der Erfindung erwiesen haben.

In erfindungsgemäß vorteilhafter Weise ermöglichen es die erfindungsgemäß vorgesehen Netzspannungsdetektormittel, im Rahmen der erfindungsgemäßen Regelmittel zusätzlich ein Detektorsignal zu verarbeiten, welches einen aktuellen Wert einer anliegenden (und zum Betreiben der Erwärmungsvorrichtung verwendeten) Netzspannung wiedergibt bzw. einem solchen aktuellen Wert proportional ist. Erfindungsgemäß können dann die Regelmittel als Reaktion auf dieses Detektorsignal unter Ausbildung eines Spannungs-Differenzsignals zu einem Spannungs-Sollwert bzw. Spannungs-Normwert der (Netz-) Betriebsspannung für die Erwärmungsvorrichtung nachteilige Effekte ausgleichen bzw. ausregeln, welche sich aus einem (gegenüber dem Sollwert) zu hohen bzw. zu niedrigen aktuellen Netzspannungswerten ergeben. Dabei kann diese Berücksichtigung bzw. dieses Ausregeln unmittelbar als Reaktion auf das Spannungs-Detektionssignal (Detektorsignal) der Netzspannungsdetektionsmittel erfolgen, ohne dass erst eine thermische Auswirkung einer gegenüber einem Spannungssollwert zu hohen oder zu niedrigen aktuellen Spannung mittels thermischer Sensorik erfasst und im durch die Regelmittel realisierten Regelkreis berücksichtigt wird. Damit ist die Reaktionsmöglichkeit und Reaktionsgeschwindigkeit auf Netzspannungsabweichungen deutlich erhöht, mit der vorteilhaften Wirkung, dass entsprechende Netzspannungs-schwankungsbedingte Temperaturabweichungen in der - bevorzugt als Thermoblock realisierten oder mittels eines Thermoblocks realisierten - Erwärmungsvorrichtung minimiert werden können, mit den beschriebenen vorteilhaften Auswirkungen auf die Qualität des auszubringenden Heißgetränkeprodukts.

Im Rahmen bevorzugter Weiterbildungen der Erfindung, insbesondere unter dem Gesichtspunkt einer kostengünstigen Herstellung und Tauglichkeit der Vorrichtung für eine Großserienfertigung, ist es weiterbildungsgemäß vorgesehen und bevorzugt, die Regelmittel und ggf. weitere Betriebssteuerungsmittel, etwa für eine Ansteuerung der Pumpenmittel vorgesehene Steuereinheit, durch einen Mikrocontrollerund/oder Mikroprozessoreinheit zu realisieren, welche in ansonsten bekannter Weise unter Nutzung von implementierten Software-Routinen und geeigneter Peripherie- bzw. Treiberschaltungen über vorhandene Steuerausgänge die vorgesehenen Funktionalitäten der Regelmittel, eingeschlossen auch der erfindungsgemäße Netzspannungs-Schwankungs-Kompensation, implementiert. Dabei ist es besonders bevorzugt, die erfindungsgemäßen Netzspannungsdetektormittel durch eine üblicherweise ohnehin im Rahmen derartiger Mikroprozessor- bzw. Mikrocontrollereinheit vorhandene A/D-Schnittstelle umzusetzen bzw. derartige Digitalisier- und Quantisierungseinheiten geeignet vorzuschalten. Während sich die vorliegende Erfindung, insbesondere aufgrund der Beheizungseigenschaften und ihrer Verbreitung für die gängigen Heißgetränk-Bereitungsvorrichtungen, bevorzugt für einen Thermoblock zur Realisierung der Erwärmungsvorrichtung eignet, insoweit eine diesbezügliche Weiterbildung der Erfindung als bevorzugt beansprucht wird, ist es gleichwohl von der Erfindung umfasst, auch andere, in der eingangs beschriebenen Weise einen thermischen Regel-Überschwingungs-Verlauf erzeugende Konfigurationen der Beheizungsmittel vorzusehen. Gleichermaßen ist es zwar von der Erfindung umfasst, eine Widerstands-Heizvorrichtung, weiter bevorzugt in Verbindung mit einem Thermoblock, zur bevorzugten Realisierung der Erwärmungsvorrichtung vorzusehen, allerdings können auch im Hinblick auf das Beheizungselement, welches zudem weiter bevorzugt als Thermistor mit negativem Temperatur-Koeffizient (NTC) realisiert sein kann, andere Ausgestaltungen der Wärmeerzeugung gewählt werden.

In erfindungsgemäß weiterbildender Weise sind den Pumpenmitteln gemäß einer weiteren bevorzugten Ausführungsform der Erfindung Betriebssteuerungsmittel, vorteilhaft weiterbildend realisiert durch die beschriebene Mikroprozessor- oder Mikrocontrollereinheit, so zugeordnet, dass diese die Pumpenmittel nicht unmittelbar nach der Aktivierung mit einer Volllast-Ansteuerung belegen, vielmehr sorgen die erfindungsgemäßen Betriebssteuerungsmittel für ein verlangsamtes, graduell ansteigendes Förderverhalten der Pumpenmittel, welche günstig und bevorzugt im Rahmen der vorliegenden Erfindung als Schwinganker- bzw. Vibrationspumpe ausgestaltet sind. Vorteilhafte Konsequenz im Rahmen der Erfindung ist eine Vergleichsmäßigung der Durchströmung der Erwärmungsvorrichtung, so dass insbesondere ein als nachteilig und für das erzeugte Heißgetränkeprodukt schädlicher Wasser-Gegendruck durch die Brüheinheit, verbunden mit nachteiligem Temperatur-Überschwingen der Temperaturregelung der Erwärmungsvorrichtung, nicht, oder nur im vermindertem Maße, auftritt. Vorteilhafte Konsequenz ist eine weiter verbesserte Qualität des erzeugten Heißgetränks, etwa sichtbar an bestmöglich hergestellter Crema.

In erfindungsgemäß vorteilhafter Weise wird dies durch die Betriebssteuerungsmittel dadurch bewirkt, dass diese nach einer Aktivierung der Bearbei-tungsvorrichtung bis zu einem nachfolgenden Voll- bzw. Zielleistungspumpetrieb, einen von kleinen Leistungswerten kontinuierlich und/oder graduell ansteigenden Verlauf der Ansteuerleistung bzw. Ansteuerspannung für die Pumpenmittel bewirken. Dieser ist im Rahmen der Weiterbildung der Erfindung kontinuierlich ansteigend und erfindungsgemäß im Zeitverlauf linear und/oder rampenförmig, so dass eine steuerungstechnische Umsetzung vereinfacht ist.

Dadurch, dass im Rahmen dieser Weiterbildung der vorliegenden Erfindung neben einem Ziel- bzw. Volllastbetrieb der Pumpenmittel nunmehr auch der Anfahrbetrieb gesteuert und dementsprechend das Pumpenverhalten während dieses Zeitraums beherrscht ist, besteht zu jedem Zeitpunkt des Betriebs Orientierung über eine tatsächlich durch die Pumpenmittel geförderte Wassermenge. Dies bewirkt die weitere, im Rahmen dieser Weiterbildung der Erfindung umgesetzte und vorteilhafte Konsequenz, dass auf Messmittel bzw. Detektionsmittel für einen tatsächlichen Wasserdurchfluss - vor oder nach den Pumpenmitteln entlang der Strömungsrichtung des Wassers - verzichtet werden kann. Offensichtlich sind die vorteilhaften Konsequenzen dieses Erfindungsaspekts für die angestrebte kostengünstige und großserientaugliche Fertigbarkeit der Heißgetränk-Bereitungsvorrichtung, insbesondere mit einer Zielgruppe in privaten Haushalten bzw. für den privaten Konsum.

Dabei ist es zwar bevorzugt, den vorbestimmten Anfahrtszeitraum linear ansteigend im Hinblick auf eine Pumpenleistung und/oder eine elektrische Leistungsaufnahme der Pumpenmittel auszugestalten, es kann jedoch eine andere Anstiegsform vorbestimmt sein, welche etwa progressiv oder degressiv im Zeitverlauf ausgestaltet ist. Wesentlich für die Realisierung der Erfindung ist lediglich, dass der erfindungsgemäße Anfahrtszeitraum, bis eine (maximale) Soll- bzw. Zielleistung der Pumpenmittel erreicht ist, länger ist als ein Anfahrbetrieb, welcher etwa durch Aufschalten einer maximalen Spannung oder Leistung unmittelbar mit dem Aktivieren erfolgen würde (wobei hier ja auch, etwa durch induktive Effekte bedingt, eine gewisse Mindestverzögerung entsteht - der Anfahrtszeitraum im Rahmen der vorliegenden Erfindung ist dagegen länger eingerichtet).

Besonders bevorzugt ist es im Rahmen der Erfindung, den Anfahrtszeitraum in Bezug zu einer Regelzeitkonstante der Regelfunktion zu setzen, welche bevorzugt und weiterbildungsgemäß durch die der Erwärmungsvorrichtung zugeordneten Regelmittel eingerichtet bzw. umgesetzt ist. Dabei sehen bevorzugte Weiterbildungen der Erfindung vor, den Anfahrtszeitraum so zeitlich zu bemessen, dass dieser mindestens gleich, üblicherweise und bevorzugt aber länger als eine solche Regelzeitkonstante ist, bevorzugt mindestens das Zweifache, weiter bevorzugt mindestens das Vier- oder Fünffache einer derartigen Konstante beträgt. Dabei ist es wiederum bevorzugt, die Regelfunktion als PD-(proportional-differenzial) Regelung zu realisieren. In der praktischen Realisierung einer Portionskaffeemaschine als Heißgetränk-Bereitungsvorrichtung und üblichen kapselartigen Einzelportionsverpackungen für Kaffeepulver als Getränkerohstoff würde der erfindungsgemäße Anfahrtszeitraum bevorzugt mindestens 1 Sekunde betragen, wobei auch Mindest-Anfahrtszeiträume von 2, 2,5 oder mehr Sekunden als bevorzugte Realisierungsformen der Erfindung gelten. Auch wenn es gemäß des diskutierten Ausführungsbeispiels günstig ist, ohne Flowmeter oder dergleichen separate Wasserdurchfluß-Detektionsmittel die Erfindung zu realisieren, umfasst die erfindungsgemäße Lehre gleichwohl auch Realisierungen mit einem Flowmeter, dessen Ausgangssignal dann eine Größe für eine (z.B. PI-) Regelung der Pumpenmittel sein kann.

Im Ergebnis ermöglicht es die vorliegende Erfindung, in herstellungstechnisch und im Hinblick auf einen erforderlichen Hardware-Aufwand günstiger Weise, gleichwohl mit leistungsfähigen Betriebseigenschaften und deutlichen Qualitätsverbesserungen bezogen auf das Endprodukt, eine Heißgetränk-Bereitungsvorrichtung zu schaffen, welche zwar in besonders bevorzugter Weise als Portionskaffeemaschine, und hier insbesondere zur Verarbeitung von kapselartigen Einzelportionsverpackungen, geeignet ist, gleichwohl ist auch die vorliegende Erfindung nicht auf diese bevorzugte Verwendungsform beschränkt.

Weitere Vorteile, Merkmale und Einzelheiten der Erfindung ergeben sich aus der nachfolgenden Beschreibung bevorzugter Ausführungsbeispiele sowie anhand der Zeichnungen; diese zeigen in:

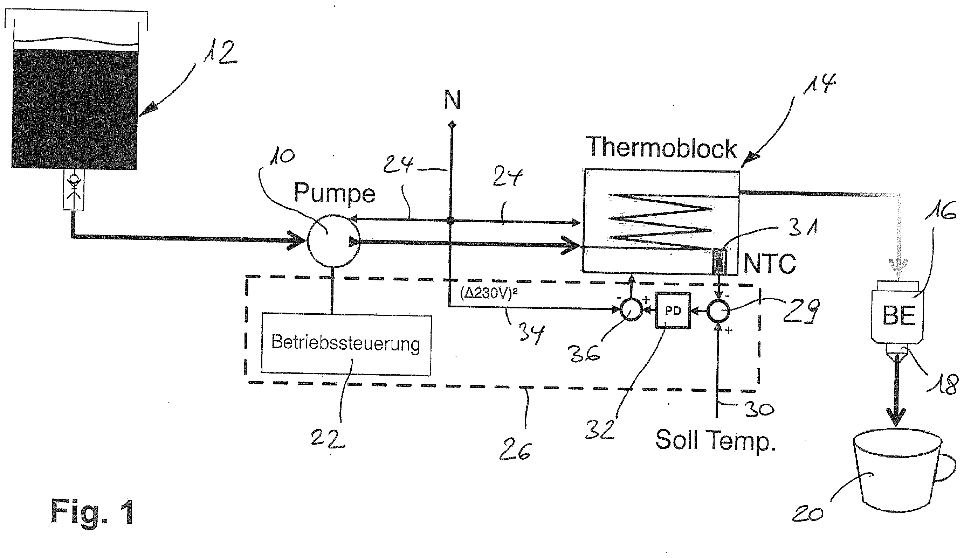

- Fig. 1: ein schematisches Blockschaltbild der Heißgetränk-Zubereitungsvorrichtung gemäß einem ersten bevorzugten Ausführungsbeispiel der Erfindung.

Eine als Schwingankerpumpe 10 ausgestaltete Pumpeneinheit in einem in der Figur nicht gezeigten Gehäuse der Heißgetränk-Zubereitungsvorrichtung fördert Frischwasser aus einem gleichermaßen im oder am Gehäuse vorgesehenen Frischwassertank 12 und bringt dies zu einer als Thermoblock 14 ausgestalteten Erwärmungsvorrichtung (Heizeinheit), aus welcher dann das in ansonsten bekannter Weise erwärmte Wasser in eine Brüheinheit 16 gelangt, welche - wiederum in ansonsten bekannter Weise - zur Aufnahme und Verarbeitung von Kapseln als Portionsverpackungen für Getränkerohstoffe, hier Kaffeemehl, ausgebildet und vorgesehen ist. Aus einem der Brüheinheit 16 nachgeschalteten Auslass 18 tritt dann der fertig gebrühte Kaffee zum Konsum in einen geeignet vorgesehenen Behälter 20 aus. Im Blockschaltbild der Fig. 1 symbolisieren die die Einheiten 12, 10, 14, 16, 20 verbindenden, fett dargestellten Pfeile den Wasserfluss in Strömungsrichtung, von (noch unerwärmtem) Frischwasser bis zum fertigen Heißgetränk.

Den Pumpenmitteln 10 ist eine schematisch als Funktionsblock 22 dargestellte Betriebssteuerungseinheit vorgeschaltet, welche insbesondere eine Steuerung bzw. Veränderung der aus einem Netzspannungsanschluss N des Gehäuses über Netzspannungsleitungen 24 (dünn gezeichnete Pfeile) anliegender Netzspannung vornimmt. Konkret ist die Betriebssteuerung 22 Teil einer mittels einer Mikrocontrollereinheit realisierten und durch die gestrichelte Umrandung 26 symbolisierten zentralen elektronischen Verarbeitungseinheit im Gehäuse, welche, geeignet programmiert bzw. mit geeigneten ein- und ausgehenden Schnittstellen und ggf. elektronischer Treiberinfrastruktur versehen, Steuer- und Regelfunktionalitäten für die Pumpenmittel 10, ebenso wie für die Thermoblock-Heizeinheit 14, vornehmen kann.

So bewirkt etwa die durch die Mikrocontrollereinheit 26 realisierte Betriebssteuerungseinheit 22, dass bei einem Aktivieren der Getränkebereitungsvorrichtung - typischerweise mittels Betätigung durch eine Bedienperson eines am oder im Gehäuse vorgesehenen Schalters oder dergleichen Bedieneinheit - die die Pumpenmittel 10 realisierende Schwingankerpumpe über einen rampenförmigen Anfahrtszeitraum von ca. 2 bis 3 Sekunden, beginnend mit dem Einschalten und bis zu einem Soll- bzw. Volllastbetrieb im Leistungs-Zeitdiagramm, angesteuert wird. Die Rampenform wird durch eine (ansonsten als bekannt vorauszusetzende) Phasenanschnittssteuerung des Netzspannungssignals realisiert, welches an den Pumpenmitteln 10 zu deren Spannungsversorgung anliegt und welches zur Realisierung des bevorzugt rampenförmig-linearen Anstiegs kontinuierlich in der Anschnittphase verändert wird.

Vorteilhafte Wirkung dieser im Rahmen des erfindungsgemäßen Ausführungsbeispiels realisierten Anfahrtsphase (Anfahrtszeitraums) ist, dass der in Wasserflussrichtung nachgeschalteten Thermoblock-Heizeinheit 14 zum Zeitpunkt der Geräteaktivierung keine sprunghaft große, einem Volllastbetrieb der Pumpe entsprechende Wassermenge zufließt, vielmehr diese in den Thermoblock 14 eintretende Wassermenge graduell und kontinuierlich ansteigend von einem niedrigen Wert ist. Vorteilhafte Wirkung ist, dass eine wiederum mittels der Mikrocontrollereinheit 26 realisierte, eine Beheizungstemperatur der Erwärmungsvorrichtung 14 auf eine Solltemperatur 30 regelnde Regelungseinheit 32 genug Zeit hat, um als Reaktion auf das eintretende kalte Wasser eine thermisch überschwungsfreie (oder zumindest überschwungsarme) Regelung durchzuführen, wiederum mit der vorteilhaften Wirkung, dass die vom Thermoblock 14 auf durchströmendes gebrachte Erwärmung keine (regelungsbedingten) Temperaturschwankungen zeigt. Dies ist dann Voraussetzung für einen qualitativ hochwertigen Braubetrieb in der Brüheinheit 16, wobei insbesondere auf diese Weise sichergestellt ist, dass Qualitätskriterien wie etwa eine farblich und geschmacklich einwandfreie Crema, zu jedem Betriebszeitpunkt, auch schon während eines Zeitraums unmittelbar nach dem Einschalten und eines Regelungsbetriebs der Regelung 32, sichergestellt sind. Schematisch durch einen Regelverstärker 29 bzw. einen Thermosensor 31 (NTC) realisiert, erfolgt die Temperaturregelung entsprechend einer PD-Regelungsfunktion, wobei dies als rein exemplarisch, gleichwohl bevorzugt, zu verstehen ist.

Zweiter vorteilhafter Effekt dieser erfindungsgemäßen Ansteuerung der Pumpenmittel 10 durch die Betriebssteuerungseinheit 22 ist der Umstand, dass über den gesamten Betriebszeitraum der Pumpenmittel deren Betriebsparameter (und damit insbesondere auch der Wasserdurchfluss) erfasst und beherrscht sind. Vorteilhaft bringt dies die Konsequenz, dass die Vorrichtung, außerhalb der Pumpenmittel 10, keine gesonderten Durchfluss- und/oder Wassermengendetektoren aufweist, was sich gerade vor dem Hintergrund einer Eignung der vorliegenden Technologie für preisgünstig herstellbare Massenprodukte als vorteilhaft erweist, da auf diese Weise eine zusätzlich Baugruppe entfallen kann.

Das Blockschaltbild der Fig. 1 verdeutlicht eine zusätzliche, vorteilhafte Eigenschaft der Erfindung, nämlich die Möglichkeit, auf eine Höhe der Netzspannung N (bzw. eine Änderung dieser Netzspannung) durch Anpassung der Temperaturregelung des Thermoblocks 14 reagieren zu können. Genauer gesagt liegt über eine Spannungsdetektorleitung 34 ein Momentanwert der Netzspannung an einer schematisch als Differenzverstärker 36 gezeichneten Reglerkomponente an, so dass ein Einfluss der Netzspannung, insbesondere eine (positive oder negative) Abweichung der Netzspannung von einem üblichen NetzspannungsSollwert, etwa 230V, im Rahmen der Temperaturregelung berücksichtigt und ausgeregelt werden kann. Da sich nämlich Spannungsschwankungen, damit Differenzen zu einem Spannungs-Sollwert, quadratisch im Hinblick auf die elektrische Heizleistung im Thermoblock 14 auswirken, besaßen bekannte, nicht im Hinblick auf Netzspannungsschwankungen kompensierte elektrische Heizvorrichtungen das Problem, dass etwa bei einer erhöhten Netzspannung sich diese in unterwünscht hoher Beheizungstemperatur des Thermoblocks niederschlug, welche dann, ggf. erst wiederum mit der Regelverzögerung ausgeregelt werden musste.

Eine unmittelbare Spannungserfassung, wie mittels der Detektoreinheit 34 - etwa in der Praxis realisiert durch einen ohnehin vorhandenen A/D Eingang der Mikrocontrollereinheit 26, ggf. unterstützt durch ein vorgeschaltetes Anpassungsnetzwerk - ermöglicht es nunmehr, bereits unmittelbar diese Spannungsschwankungen im Rahmen der Temperaturregelung zu berücksichtigen und so, wiederum vorteilhaft und analog zur vorstehend erläuterten Funktionalität bei unerwünschten Überschwingern, das Erwärmungsverhalten des Thermoblocks in jedem Betriebszustand, also insbesondere auch bei Spannungsschwankungen, zu vergleichmäßigen.

Im Extremfall lässt sich die gezeigte Kompensation sogar benutzen, um eine - damit automatische - Anpassung an völlig andere Netzspannungsumgebungen, wie etwa eine 110V Umgebung, zu realisieren.

Im Ergebnis entsteht durch die vorliegende Erfindung in hardwaretechnisch äußerst einfacher, dabei leicht zu montierender und betriebssicherer Weise eine Heißgetränk-Bereitungsvorrichtung, welche erhöhte Qualität in Erwärmung und Bereitung des Heißgetränks mit konstruktiver Eleganz kombiniert. Dabei ist die Verwendung als Kaffeemaschine zur Verarbeitung von kapselartigen Portionsverpackungen bevorzugt, diese Verwendung beschränkt jedoch nicht das deutlich größere, universelle Einsatzspektrum der vorliegenden Erfindung, etwa auch auf sog. Vollautomaten, d.h. vollautomatische Kaffeemaschinen mit zusätzlichen Dosier- und Mahleinheiten für als geschüttete Bohnen vorliegenden Getränkerohstoff.

## Patentansprüche

1. Vorrichtung zur Bereitung eines Heißgetränks mit
einer in einem Gehäuse vorgesehenen, elektrisch betriebenen Erwärmungsvorrichtung (14) für aus einem Frischwasseranschluss des Gehäuses oder einem im Gehäuse vorgesehenen Wassertank (12) mittels elektrisch betriebener Pumpenmittel (10) herangeführtes Wasser
und einer der Erwärmungsvorrichtung nachgeordneten Brüheinheit (16), in welcher erwärmtes Wasser mit einem Getränkerohstoff zusammengeführt und über Auslassmittel (18) aus dem Gehäuse ausgetragen werden kann,
wobei der Erwärmungsvorrichtung Regelmittel (29, 32, 36) zum Regeln eines Wasserkontaktbereichs und/oder einer Wassertemperatur des erwärmten Wassers auf mindestens einen Temperatursollwert (30) zugeordnet sind,
**dadurch gekennzeichnet,**
**dass** einem für das elektrische Betreiben der Erwärmungsvorrichtung beschalteten Netzspannungsanschluss (N) der Bereitungsvorrichtung Netzspannungsdetektormittel (34) so zugeordnet sind,
**dass im Rahmen der Regelmittel** als Reaktion auf ein von einer aktuell erfassten Netzspannung abhängiges Detektorsignal eine elektronische Beeinflussung einer Regelfunktionalität der Regelmittel in Form einer Kompensation eines elektrischen Leistungsbeitrages einer von einem Netzspannungssollwert abweichenden Netzspannungsdifferenz auf die Erwärmungsvorrichtung erfolgen kann, wobei den Pumpenmitteln Betriebssteuerungsmittel (22) so zugeordnet sind, dass als Reaktion auf eine bevorzugt über eine manuell betätigbare Bedieneinheit am Gehäuse erfolgte Aktivierung der Bereitungsvorrichtung zur Herstellung einer Portion des Heißgetränks eine elektrische Ansteuerung der Pumpenmittel zu deren Aktivierung und bis zu einem nachfolgenden Zielleistungspumpbetrieb mit einem Ansteuerspannungs- und/oder Ansteuerleistungsverlauf erfolgt, der über einen vorbestimmten Anfahrtszeitraum kontinuierlich ansteigend **und im Zeitverlauf linear und/oder rampenförmig** eingerichtet ist.

2. Vorrichtung nach Anspruch 1,
**dadurch gekennzeichnet,**
**dass** die Erwärmungsvorrichtung einen Thermoblock (14) aufweist oder durch einen solchen realisiert ist.

3. Vorrichtung nach Anspruch 1 oder 2,
**dadurch gekennzeichnet,**
**dass** die Erwärmungsvorrichtung mit Wärmedetektionsmitteln (31), insbesondere mit einem einen negativen Temperaturkoeffizienten aufweisenden Thermistor, realisiert ist.

4. Vorrichtung nach einem der Ansprüche 1 bis 3,
**dadurch gekennzeichnet,**
**dass** die Netzspannungsdetektormittel mittels einer Mikrocontrolleroder Mikroprozessoreinheit (26) realisiert sind oder durch eine solche Mikrocontroller- oder Mikroprozessoreinheit ausgewertet werden, wobei insbesondere eine zur Realisierung der Regelmittel vorgesehene Mikrocontroller- oder Mikroprozessoreinheit zur Realisierung und/oder Auswertung des Detektorssignals der Netzspannungsdetektormittel verwendet wird.

5. Vorrichtung nach **einem der Ansprüche 1 bis 4,**
**dadurch gekennzeichnet,**
**dass** der Anfahrtszeitraum gleich oder länger ist als eine Regelzeitkonstante einer durch die Regelmittel realisierten Regelfunktion, insbesondere einer PD-Regelung, ist, bevorzugt das mindestens Zweifache, weiter bevorzugt das mindestens Vierfache, der Regelzeitkonstante beträgt,
und/oder der Anfahrtszeitraum mindestens eine Sekunde, bevorzugt mindestens zwei Sekunden, bei einer Ausgestaltung der Bereitungsvorrichtung zur Verarbeitung von in Einzel- oder Mehrportionsverpackungen, insbesondere Kapseln, portioniertem Kaffeemehl als Getränkerohstoff beträgt.

6. Verwendung der Bereitungsvorrichtung nach einem der Ansprüche 1 bis 5 als Portionskaffeemaschine, insbesondere für den Heimoder Privatgebrauch.

## Claims

1. A device for preparing a hot beverage comprising
an electrically operated heating device (14) provided in a housing and serving to heat water supplied from a clean-water connection of the housing or from a water tank (12) provided in the housing by means of electrically operated pump means (10) and a brewing unit (16) which is disposed downstream of the heating device and in which heated water can be blended with a beverage raw material and be discharged from the housing via outlet means (18),
the heating device being assigned control means (29, 32, 36) for controlling a water contact area and/or a water temperature of the heated water to at least one target temperature (30), **characterized in that**
mains voltage detector means (34) are assigned to a mains voltage connection (N) of the preparation device, said mains voltage connection (N) being connected for the electrical operation of the heating device in such a manner that
in response to a detector signal which depends on a currently detected mains voltage, a control functionality of the control means can be electronically influenced in the form of an electrical power contribution of a mains voltage difference that deviates from a target mains voltage to the heating device can be compensated **within the scope of the control means**, operation control means (22) being assigned to the pumping means in such a manner that in response to an activation of the preparation device for producing a serving of the hot beverage, said activation preferably being carried out via a manually operable operating unit on the housing, the pumping means are electrically actuated for their activation and operated at a drive voltage curve and/or a drive power curve which is set up so as to continuously rise for a predetermined starting period and is **linear and/or ramp-shaped over time** until a subsequent target power pumping operation is reached.

2. The device according to claim 1,
**characterized in that**
the heating device has or is realized by a thermoblock (14).

3. The device according to claim 1 or 2,
**characterized in that**
the heating device is realized with heat detector means (31), in particular with a thermistor having a negative temperature coefficient.

4. The device according to any one of claims 1 to 3,
**characterized in that**
the mains voltage detector means are realized by means of a microcontroller unit or microprocessor unit (26) or that said mains voltage detector means are analyzed by such a microcontroller unit or microprocessor unit, a microcontroller unit or microprocessor unit provided for realizing the control means being used for realizing and/or analyzing the detector signal of the mains voltage detector means.

5. The device according to **any one of claims 1 to 4**,
**characterized in that**
the starting period is equal to or longer than a control time constant of a control function realized by the control means, in particular a PD-control, and that the starting period is at least double, more preferably at least quadruple, the control time constant,
and/or that the starting period is at least one second, preferably at least two seconds, in an embodiment of the preparation device for processing ground coffee as a beverage raw material, which is portioned in individual or multi-portion packages, in particular capsules.

6. A use of the preparation device according to any one of claims 1 to 5 as a portion coffee machine, in particular for home or private use.

## Revendications

1. Dispositif pour la préparation d'une boisson chaude comprenant un dispositif de chauffage (14) actionné électriquement, prévu dans un boîtier et servant à chauffer de l'eau fournie à partir d'un raccordement en eau propre du boîtier ou à partir d'un réservoir d'eau (12), qui est prévu dans le boîtier, au moyen des moyens de pompage (10) actionnés électriquement
et une unité d'infusion (16) qui est disposée en aval du dispositif de chauffage et dans laquelle de l'eau chauffée peut être mélangée avec une matière première de boisson et peut être déchargée du boîtier par des moyens de sortie (18),
des moyens de réglage (29, 32, 36) pour régler une zone de contact d'eau et/ou une température de l'eau chauffée à au moins une température souhaitée (30) étant assignés au dispositif de chauffage,
**caractérisé en ce que**
des moyens de détection de tension de réseau (34) sont assignés à un raccordement de tension de réseau (N) du dispositif de préparation, ledit raccordement de tension de réseau (N) étant connecté pour le fonctionnement électrique du dispositif de chauffage de telle sorte
qu'en réponse à un signal de détection dépendant d'une tension de réseau actuellement détectée, une fonctionnalité de réglage des moyens de réglage peut être influencée électroniquement, sous la forme d'une contribution de puissance électrique d'une différence de tension de réseau déviante d'une tension de réseau souhaitée au dispositif de chauffage peut être compensée **dans le cadre des moyens de réglage**, des moyens de commande de fonctionnement (22) étant assignés aux moyens de pompage de telle sorte qu'en réponse à une activation du dispositif de préparation pour la production d'une portion de la boisson chaude, ladite activation étant effectuée de préférence par une unité de commande actionnable manuellement sur le boîtier, les moyens de pompage sont actionnés électriquement pour leur activation à une courbe de tension de commande et/ou une courbe de puissance de commande qui est configurée de telle manière qu'elle monte continuellement pendant une période de démarrage prédéterminé et **linéaire et/ou en forme de rampe au fil du temps** jusqu'à ce que un fonctionnement de pompage suivant à puissance cible est atteinte.

2. Dispositif selon la revendication 1,
**caractérisé en ce que**
le dispositif de chauffage a ou est réalisé par un bloc thermique (14).

3. Dispositif selon la revendication 1 ou la revendication 2,
**caractérisé en ce que**
le dispositif de chauffage est réalisé avec des moyens de détection de chaleur (31), notamment avec une thermistance qui a un coefficient de température négatif.

4. Dispositif selon l'une quelconque des revendications 1 à 3,
**caractérisé en ce que**
les moyens de détection de tension de réseau sont réalisés au moyen d'une unité de microcontrôleur ou une unité de microprocesseur (26) ou que lesdits moyens de détection de tension de réseau sont analysés par une telle unité de microcontrôleur ou une unité de microprocesseur, une unité de microcontrôleur ou une unité de microprocesseur prévue pour réaliser les moyens de réglage étant utilisée pour réaliser et/ou analyser le signal de détection des moyens de détection de tension de réseau.

5. Dispositif selon **l'une quelconque des revendications 1 à 4**,
**caractérisé en ce que**
la période de démarrage est égale à ou plus longue qu'une constante de temps de réglage d'une fonction de réglage réalisée par les moyens de réglage, notamment un réglage PD, et que la période de démarrage est au moins le double, plus préférablement au moins le quadruple, de la constante de temps de réglage,
et/ou que la période de démarrage est au moins une seconde, de préférence au moins deux secondes, quand le dispositif de préparation est configuré pour traiter du café moulu comme matière première de boisson divisé en portions dans des emballages des portions individuelles ou multiples, notamment des capsules.

6. Utilisation du dispositif de préparation selon l'une quelconque des revendications 1 à 5 en tant que cafetière à dosettes, notamment pour l'usage domestique ou privé.
